# EUROPEAN PATENT APPLICATION

(11) **EP 2 369 528 A1**
(43) Date of publication of application: **28.09.2011**
(21) Application number: 10003074.1
(22) Date of filing: 23.03.2010
(51) Int. Cl.: G06N 5/02

(54) **Information processing apparatus, method and protocol for generation of formal requirements specification models**

(71) Applicant: SIEMENS AKTIENGESELLSCHAFT, 80333 München (DE)
(72) Inventor: Boulila, Naoufel, Dr., 80809 München (DE)

(57) **Abstract**

An information processing apparatus in accordance with the present invention comprises means for informal to formal models generation hosting a framework, the framework being capable of receiving input data presented in an informal or semi-formal format, automatically processing the input data to generate data presented in a formal data format, and outputting the data in formal format for further use by the information processing apparatus in a formal model.

## Description

### FIELD OF THE INVENTION

This disclosure relates generally to information processing apparatuses, and particularly but not exclusively relates to an information processing apparatus, method and protocol for generation of formal requirements specification models.

### BACKGROUND OF THE INVENTION

The embedded software is part of a larger system and has as a primary purpose providing at least partial control of the system or process in which it is embedded. Most such software is real-time and reactive (i.e. required to interact with and respond to its environment in a timely fashion during execution). The embedded software systems are used in many critical systems and devices upon which many real world physical processes depend, such as the functioning of aircrafts and the monitoring systems of nuclear plants. The embedded software systems must have a high level of reliability and robustness before they can be deployed in real-world systems.

A high cost is associated with determining the correctness of the embedded software and a still higher cost is associated with its incorrectness. The requirements for complex, embedded software systems are particularly difficult to specify and validate. The very first stages of software development have the fewest formal procedures to aid the analyst, and this is also the time at which the most costly errors are introduced in terms of being the last and most difficult to find. Many software requirements validation techniques involve building prototypes or executable specifications, or waiting until the software is constructed and then testing the whole system. Although certainly much can be learned by "testing" a specification through executing it, or from a prototype by building it, the confidence that the system will have certain properties is limited to the test cases that are executed.

A critical step in developing high-quality software and hardware is to understand and document its underlined requirements. Studies have shown that many software defects can be traced to ambiguous, incomplete and inconsistent requirements specifications and that fixing the resulting defects can be very costly, especially when the defects are detected late during development.

To insure the reliability and the robustness required from such systems high quality requirements must be specified and developed. The quality requirements are modeled, simulated and tested using rigorous formal methods. The formal specification language allows constructing precise, complete and consistent requirements specifications by representing the requirements in a formal specification language and checking the specification for properties, such as completeness and consistency, using the formal analysis techniques.

Command of the formal methods is usually the realm of experts, so when non-experts need to employ these methods for testing or simulating, the methods are very difficult for the non-experts to apply. Informal and semi-formal specifications and models such as Unified Modeling Language (UML) are easier to handle for non-experts due to their reduced complexity, logic, predicates, and proofs.

Currently employed solutions to these problems focus either on non-experts trying to acquire the necessary expertise with formal models, solutions that are very time consuming. Alternatively, the support of experts is needed to support various projects steps whenever formal methods are needed to be applied, that is also not always feasible and is very costly. Otherwise, non experts try to avoid all together the application of formal models that leads to costly errors not being detected early on in the development of the embedded software.

Should there be a need for the formal methods to be applied, the costs and delays involved with non experts learning the application of formal methods or with hiring experts to be available at any time during the development of the embedded software are high. Therefore the need exists for the non-expert personnel to be also capable to apply the formal requirements models without necessarily having full command of said models and without having to rely on costly outside expert resources at every stage of the software development.

### BRIEF SUMMARY OF THE INVENTION

The present invention provides a solution to the above problems by providing an automatic method and protocol of generation of formal requirements specification models from informal and semi-formal models, so that developers and engineers that are not familiar with formal methods can specify the high-quality requirements for the embedded systems using elements of informal and semi-formal models. The solution provided by the present invention enables the formal models to be automatically generated from said inputted information and to integrate the generated formal model for purposes of automatic model-checking, flaws detection and mitigation.

To this end the present invention specifically proposes in a first aspect to an information processing apparatus, comprising means for informal to formal models generation hosting a framework, said framework being capable of receiving input data presented in an informal or semi-formal format, automatically processing said input data to generate data presented in a formal data format, and outputting said data in formal format for further use by the information processing apparatus in a formal model.

The present invention specifically proposes in a second aspect that means for informal to formal models generation comprise input means for receiving the input data presented in an informal or semi-formal format, configuration means for defining formal model language rules, transformation means for automatically transforming the provided models into a corresponding target formal model iteratively, and output means for outputting said data in formal format for further use by the information processing apparatus in a formal model.

The present invention specifically proposes in a third aspect an information processing method executed by an information processing apparatus including a means for informal to formal models generation, the information processing method comprising receiving input data presented in an informal or semi-formal format, receiving a set of rules for conversion of a conceptual model to a formal model, processing said input data, outputting said processed data as conceptual model of said data, and converting said conceptual model into a formal model according to rules initially provided.

The present invention specifically proposes in a fourth aspect a computer-readable recording medium storing a control program, the control program causing the computer to execute a process comprising an receiving procedure for receiving input data presented in an informal or semi-formal format, and receiving a set of rules for conversion of a conceptual model to a formal model, a processing procedure for processing said input data, an outputting procedure for outputting said processed data as conceptual model of said data, and a conversion procedure for converting said conceptual model into a formal model according to rules initially provided.

### BRIEF DESCRIPTION OF THE SEVERAL VIEWS OF THE DRAWINGS

The present invention together with the above and other objects and advantages may best be understood from the following detailed description of the preferred embodiments of the invention illustrated in the drawings.

FIG. 1 portrays a flowchart of a conventional method for generating a model based requirements specification.

Fig. 2 portrays a flowchart of a method for generating a formal model based requirements specification, in accordance with the present invention.

FIG. 3 portrays a block view representation of a means for informal to formal models generation, in accordance with the present invention.

FIG. 4 portrays a schematic representation of a means for informal to formal models generation, in accordance with the present invention.

Fig. 5 portrays a detailed representation of a means for informal to formal models generation, in accordance with the present invention.

Fig. 6 portrays a detail aspect of the means for informal to formal models generation, in accordance with the present invention.

Fig. 7 portrays a further detail aspect of the means for informal to formal models generation, in accordance with the present invention.

Fig. 8 portrays a logical block diagram of an embodiment of a computing system that includes the present invention apparatus.

Fig. 9 portrays a flow chart illustrating a method of informal to formal model generation in accordance with the present invention. In Fig. 9 the order of description should not be construed as to imply that these operations are necessarily order-dependent.

Non-limiting and non-exhaustive embodiments of the present invention are described with reference to the above referenced figures, wherein like reference numerals refer to like parts throughout the various views unless otherwise specified. The order of description should not be construed as to imply that these operations are necessarily order-dependent.

### DETAILED DESCRIPTION OF THE INVENTION

Embodiments of an apparatus, protocol, and method of generation of formal requirement specification model are described herein. In the following description, numerous specific details are provided for understanding the embodiments of the present invention. One skilled in the relevant art will recognize, however, that the invention can be practiced without one or more of the specific details, or with other steps, methods, systems, components, materials, etc. In other instances, well-known structures, materials, system components, or steps of methods are not shown, or if shown are not described in detail, to avoid obscuring aspects of the invention.

Reference throughout this specification to "one embodiment" or "an embodiment" means that a particular feature, structure, step, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, steps, or characteristics may be combined in any suitable manner in one or more embodiments.

Various operations will be described as multiple discrete are steps performed in turn in a manner that is most helpful in understanding the present invention. However, the order of description should not be construed as to imply that these operations are necessarily order dependent, in particular, the order the steps are presented. Any necessary ordering is alternatively expressly mentioned or will be understood by those skilled in the art.

A plurality of informal models of describing the quality requirements for embedded systems are known in the art, such as the requirements specification documents written in mixed formats. Further, semi-formal models are also known from the art, such as unified model language (UML) or Structured Analysis and Design Technique models.
Among the formal models for describing the quality requirements for embedded systems that are known in the art are the Petri-net tools and software, the models based on formal methods such as the Four-Variable model (FVM), the software cost reduction (SCR) model, the Timed Automata model, the Abstract State Machines model and the state-based requirements specification language Requirements State Machine Language (RSML).

In the context of the describing the embodiments of the present invention the following terminology will be employed, in non-restrictive sense. Unless otherwise specified the terms are associated the meaning described bellow.

The terms "conceptual model" are used to denote a formal model in which every entity being modeled in the real world has a transparent and one-to-one correspondence to an object in the model. Formally it represents information using semantic terms such as entity, relationship, event, goal, etc., and semantic relationships such as generalization aggregation and classification. Conceptual models serve as a bridge between requirements stemming from real-world and their representation using formal requirements language.

The terms "conceptual modeling" denote the activity of formally describing some aspects of the physical and social world for the purposes of understanding and communication.

The terms "conceptual-modeling grammar" denote the language used to generate conceptual models. It provides a set of constructs and rules that show how to combine these constructs to model real-world domains. The conceptual modeling grammar is based on a theory of ontology, theory that articulates the constructs needed describe the structure and behavior of the world in general.

The terms "concept modeling" denote a number of formal or informal techniques for capturing and manipulating concepts, using a vocabulary that provides more structure than simple narrative text such as Diagrammatic Reasoning.

The term "formal" denotes a formally defined language, requirements specification, where there exists a precisely defined syntax and semantics, the language has an admissible alphabet, grammar, and vocabulary. In addition, it denotes a definition of how statements made using the vocabulary are to be interrupted. Precision of the syntax and semantics is provided by using mathematics.

The terms "formal notations" denote an ontology, syntax, and semantics, such as Enhanced Entity-Relationship Model (EER) that is part of UML language. A notation is denoted as formal if it comes with a set of rules which define its syntax and semantics. The rules can be used to determine if an expression is syntactically or semantically well formed. For formal notations at least the following ingredients must be present:
Ontology, that denotes a set of assumptions about the nature of the applications being modeled; Terminology, that denotes the terms for talking about the application, such as entities, and relationships, or time points and before, same, after relationships among them; Language, that denotes statements written in the notation such as well-formed formulas for First Order Logic; abstraction mechanisms that denote structuring mechanisms used to organize and conceptualize a large model for an example generalization aggregation classification.

The first order logic (FOL) or set theory are used for formalizing mathematical theories such as in number theory, so the focus on aspects such as infinity and deduction. For original oral modeling, common sense reasoning might render more appropriate results than deduction.

The terms "requirements specification" referrer to the stage preceding software design. It may be referred to as specification and is often used as an abbreviation for functional specifications. The specification describes desired properties for system to be built. At the same time, it is very important to achieve an understanding of the application domain, including the environment within which the proposed system would eventually function. Therefore it is important for the requirement model to capture explicitly the understanding of the environment of the proposed system.

The formal specification languages are developed largely for specifying programs rather than models, which represent abstractions of real-world artifacts. There are three types of specification languages:
Operational: where the specification is an executable abstraction of the implementation, such as Lisp. Prolog, Smalltalk, state-based, that views, a software system in terms of states and procedures, such as VDM, Z ...., and algebraic, that view a program as a set of abstract data structures, together with a set of operations, operations that are defined in terms of Algebraic axioms, such as Larch, Clear, OBJ.

The formal requirements for the modeling language may be general in high level requirements. The general and high-level requirements focus on how to represent knowledge in the first place. It is accomplished with the use of constructs that shall include a logical sub language for integrity constraints and deductive rules. It is further accomplished with the use of formal notation that shall include a formal notation as defined above, including an ontology language and abstraction mechanism. It is further yet accomplished with the use of abstractions that shall have mechanisms for generalization attribution and classification. Meta- classes are also used which define the requirement modeling language domain model.

Real-world artifacts are modeled through a systematic identification of relevant aspects of the domain and provide direct representations of them in the requirements specification. The models constitute the basis for understanding the world as well as for communicating among all involved parties. Requirements engineering activities are defined as model construction, management and analysis tasks.

Formal language is used to express requirements models. The advantage of using formal language is that the resulting descriptions have well defined semantics, since in order to create the semantics methods imported from mathematical logic are used. The advantages of having clear semantics are multiple, including avoiding different interpretations of a given model, and offering a basis for various ways of reasoning with models, either through consistency checking or simulation and prototyping. It is of note that formal models use formal requirements modeling language does not exclude the use of informal notations. The formal modeling language may be built on top of an informal notation and in a later stage, defines a transformation process from an informal model into a formal model.

The formal requirements modeling language may be built on top of a model consisting of objects of various groups, grouped into classes which are in turn instances of meta-classes. This is referred to as object centered modeling. Classes and meta-classes can have properties which specify what kinds of information can be associated to their instances through factual properties.

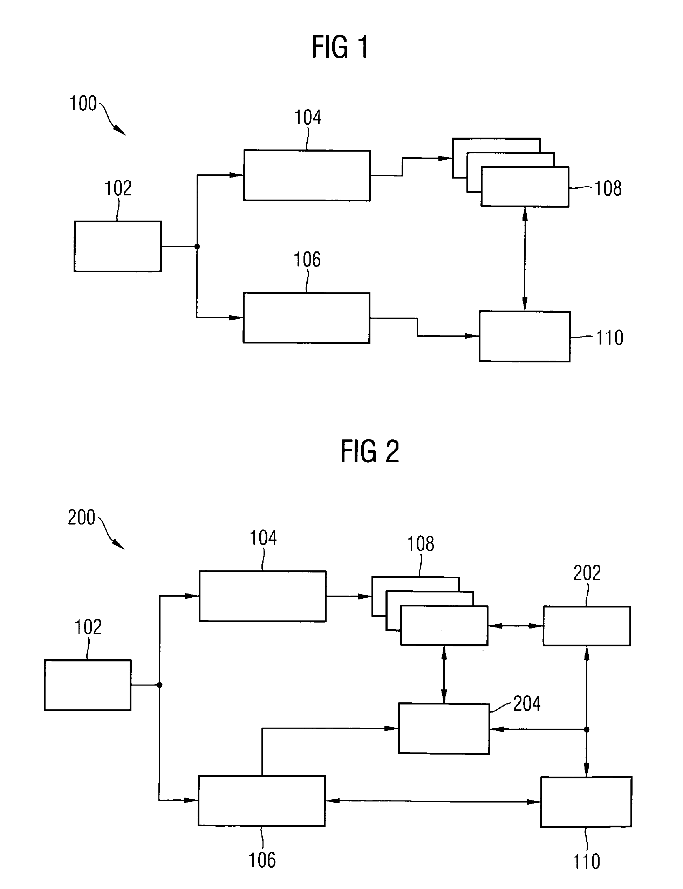

Referring now to FIG. 1, the figure portrays a flowchart of a conventional method for generating a model based requirements specification.

In accordance with a conventional method 100 for generating a model based requirements specification, in order to generate the requirements specification 110 an initial statement of needs 102 needs to be compiled, for example by polling all interested parties. The compilation of the initial statement of needs may include concerns elicitation, specification of concerns and their relationship, identification of concepts, definition and classification of variables, derivation of SCR requirement specification, and validation of requirement specification. As illustrated in Fig. 1, based on the information obtained by polling, a user may attempt to build a conceptual model 104. Said conceptual model building may progress through various phases 108, starting from building an initial model through various refinements of said model in order to obtain a conceptual model as accurate as possible. Based on said conceptual model 108 and in conjunction with the information 106 obtained by eliciting the requirements from the various stakeholders, a requirements specification 110 is built. Although the conceptual modeling may be refined by various iterations, the requirements specification 110 build by conventional methods still is not precise, complete and does not comprise consistent specification, despite the amount of time and effort that the user invests into constructing the requirements specification 110. Since a critical step in developing high-quality software and hardware is to understand and document exhaustively and accurately the underlined requirements, building an accurate and exhaustive requirements specification is very important.

The integration into the typical processes for building model-based requirement development methods of formal methods solves the problems of the obtaining precise, complete and consistent requirements specifications, by representing the requirements in a formal specification language and by checking the specification for properties, such as completeness and consistency with the formal analyses techniques.

Fig. 2 portrays a flowchart of a method for generating a formal model based requirements specification, in accordance with the present invention.

In accordance with the method for generating a formal model based requirements specification 200 a requirements specification 110 is generated by the same steps as discussed above in connection with methods 100 with the addition of feeding the results of the refined model building 108 along with the results of elicitation of stakeholder requirements 106 that are presented in a formal specification format 204 into a formal model 202 in order to generate the requirements specification 110.

Unfortunately, most of the formal methods are difficult for non-experts to deal with. It is much easier for non-experts to handle informal and semi-formal specifications and models. Therefore, in accordance with the solution presented by the present invention, software developers that are not familiar with formal methods can specify the requirements informally and/or semi-formally, and automatically generate the formal models that will facilitate an accurate requirements specification generation.

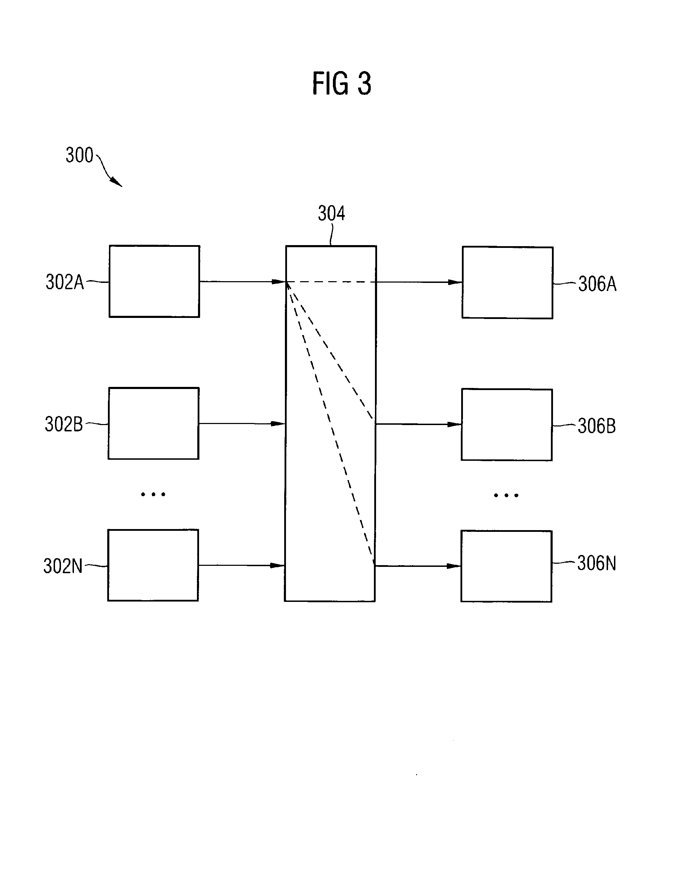

The proposed solution consists of an framework denominated Informal to formal models generation framework, or iFOG framework, that will be described in detail in the present document in connection with Figs. 3 to 8.

Referring now to FIG. 3, the figure portrays a block view representation of a means for informal to formal models generation, in accordance with the present invention.

In accordance with the present invention the means for informal to formal models generation 300 is hosting a framework 304 that is being capable of receiving input data 302 A to 302 N presented in an informal or semi-formal format, automatically processing said input data to generate data presented in a formal data format, and outputting said data in formal format 306 A to 306N for further use by an information processing apparatus in a formal model aimed at building a requirements specification 110. The means for informal to formal models generation 300 provides a mechanism to transform a requirements specification using informal or semi-formal models into a conceptual model in a first step and then into a formal model which takes various forms in accordance with rules initially provided.

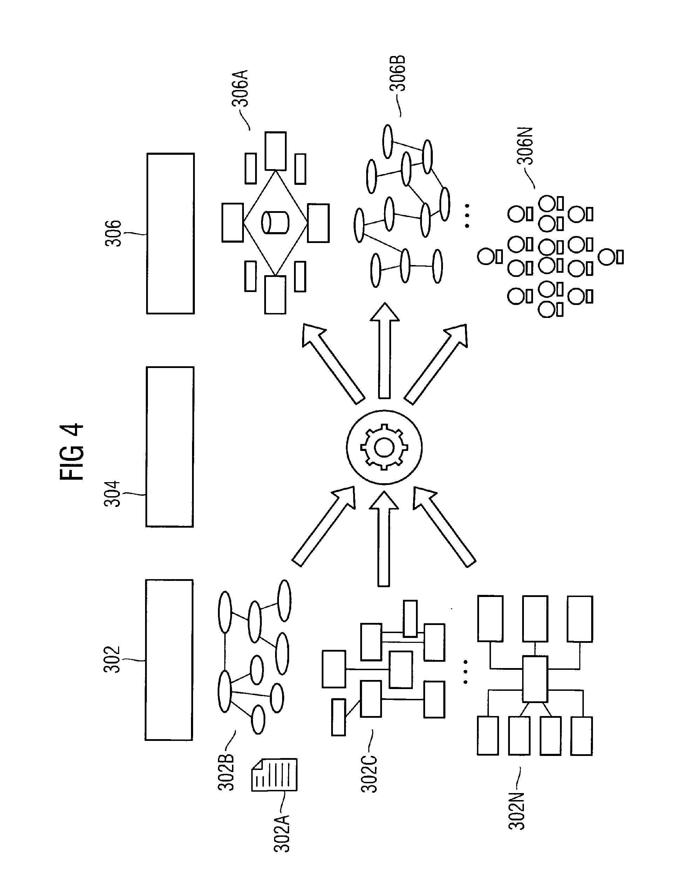

As clarified in Fig. 4, that portrays a schematic representation of a means for informal to formal models generation, in accordance with the present invention, the input data 302 A to 302N is either the requirements specification documents written in mixed formats or in unified model language (UML) or Structured Analysis and Design Technique models. The data so formatted is inputted into a framework 304 where the data is processed and the result is data presented in a formal format 306 A to 306 N, for example in Petri-net tools and software, or in models based on formal methods such as the Four-Variable model (FVM), the software cost reduction (SCR) model, the Timed Automata model, the Abstract State Machines model or the state-based requirements specification language Requirements State Machine Language (RSML).

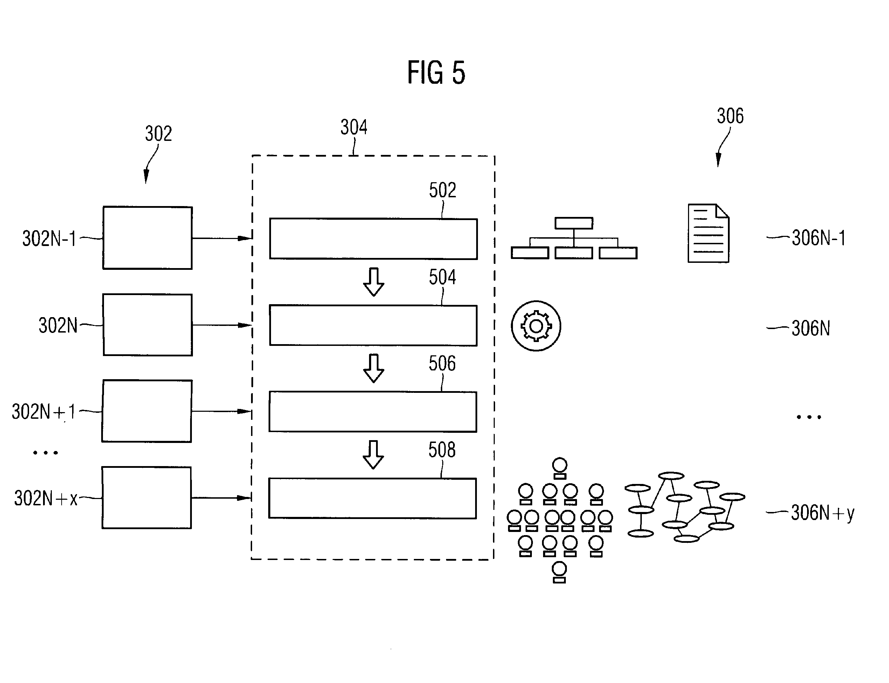

The framework 304, the means for informal to formal model generation 304, apart for data represented in informal and semi-formal models receives as well other input. As represented in Fig. 5, that portrays a detailed representation of a means for informal to formal models generation, in accordance with the present invention, the framework 304 receives data denoting input model and target model definition 301 N-1, data regarding the input rules and target rules 302 N, data regarding the iterative transformation of models 302 N+1, data regarding the output of formal models 302 N+x. Of course, apart from the data listed above, the framework 304 may receive any other data assisting in the automatic conversion of data presented in an informal or semi-formal format to data in the formal model.

As it is further illustrated in Fig. 5, the means for informal to formal models generation 304 comprises at least input means 502 for receiving the input data presented in an informal or semi-formal format, configuration means 504 for defining the formal model language rules, transformation means 506 for automatically transforming the provided models into a corresponding target formal model iteratively, and output means 508 for outputting said data in formal format for further use by the information processing apparatus in a formal model.

The input means 502 for receiving the input data presented in an informal or semi-formal format provides a mechanism to define the target formal model language, the input model which is either the semi-formal model or the informal model.

The configuration means 504 for defining the formal model language rules defines the formal model language rules such as the syntax and semantics, the rules and constrains for the semi-formal and informal models.

The transformation means 506 for automatically transforming the provided models into a corresponding target formal model iteratively provides a transformation engine which transforms the provided models into the corresponding target formal model iteratively. An informal model as an input will lead to the generation of a semi-formal model in a first step, then into a conceptual model in a second step and finally into a formal model.

The output means 508 for outputting said data in formal format for further use by the information processing apparatus in a formal model describes the output formal model as expected and defined in the input means 502.

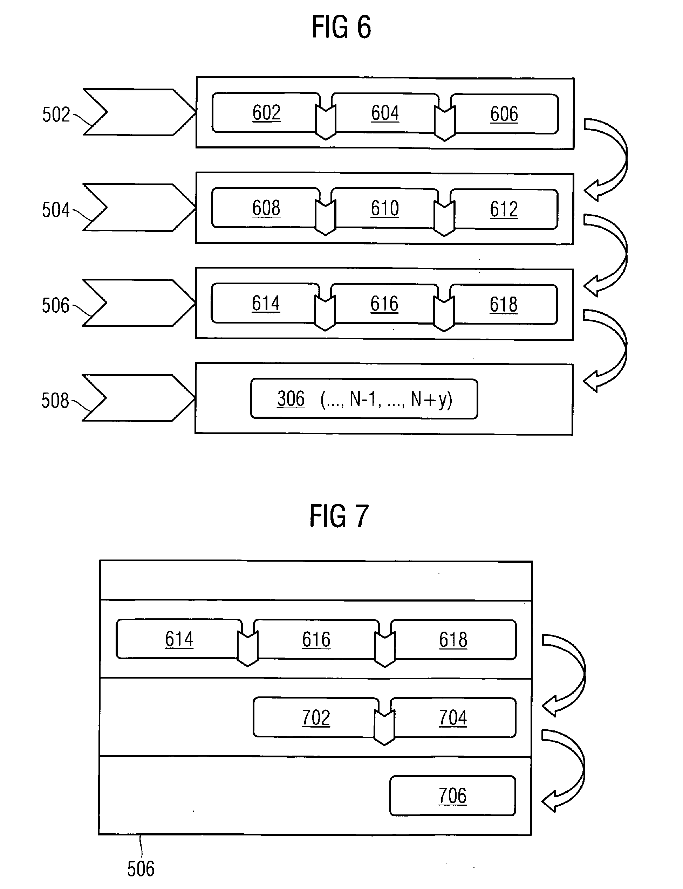

Referring now to Fig. 6, Fig. 6 portrays a detail aspect of the means for informal to formal models generation, in accordance with the present invention.

As it may be noted in Fig. 6, the input means 502 may receive data 302 presented in the specific formal language model 602, in the semi-formal model 604, and in the informal model 606. Further, the input means 502 receive input model and target definition rules. Said data is forwarded to the configuration mean 504 that may be concretely implemented as a configuration engine. The configuration engine defines the input rules and target rules such as formal language rules 608, for example the syntax and semantics, the semi-formal model rules 610, such as the rules and constrains, and the informal model rules 612. Said rules are further provided to the transformation means 506. The transformation means 506 may consist of an transformation engine following model transformation. The transformation means 506 transforms the provided models form 614, conceptual 616 and semi-formal 618 into the target formal model iteratively. The successive iterations will be discussed further in this document in connection with figure 7. The output means 508 receives the results of the successive iterations from the transformation means 506 and described the output in a formal model as expected and as defined at input.

As it may be observed in Fig. 7 that represents a further detail aspect of the means for informal to formal models generation, in accordance with the present invention, and more precisely the transformation means 506.

As noted in figure 7 should the input be an informal model in a first step said informal model will lead to the generation of an semi-formal model. Further, the semi-formal model is converted into a conceptual model and finally into a formal model.

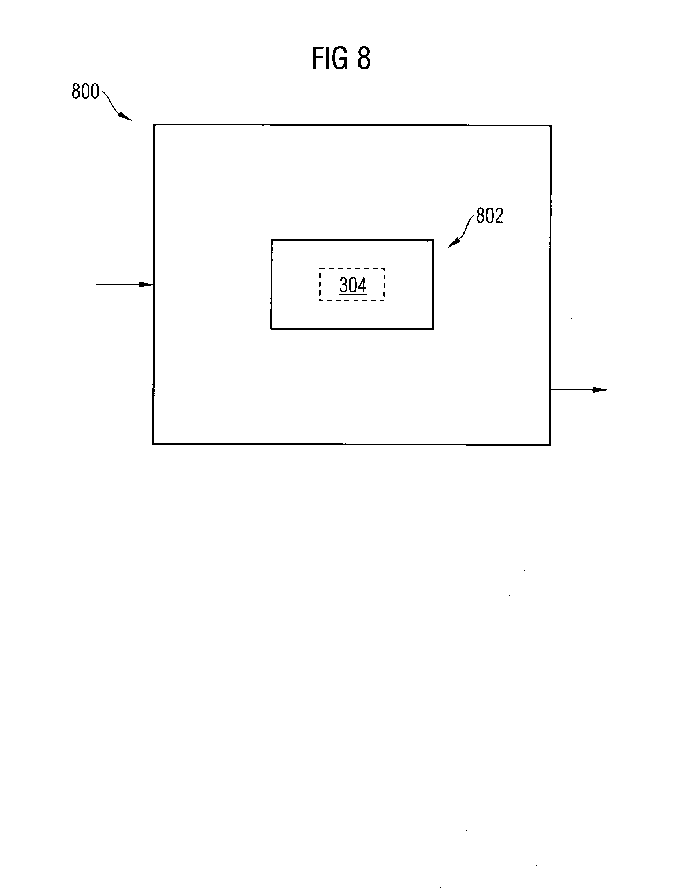

Fig. 8 portrays a logical block diagram of an embodiment of an information processing apparatus or computing system that includes the present invention apparatus.

Information processing apparatus 800 comprises among others input and output means and processing means 802. The information processing apparatus hosts the informal to formal models generation framework 304 and via said processing means 802 enables at least the configuration and transformation engines 504 and 506 of said informal to formal models generation framework 304.

It is the models generation framework 304 that executes all the transformation steps of the informal models to formal models. As discussed previously in the present documents, the transformation phase is executed according to several steps in which the transformation engine transforms the provided models into the corresponding target formal model iteratively. An informal model as an input will lead to the generation of a semi-formal model in a first step. Then into a conceptual model in a second step, and finally into a formal model. During these different steps, the in-between results are made available to the user who can decide to stop the transformation process. Although the main goal is to spare a user from intervention into the transformation process, the user can prepare manually a semi-formal or conceptual model then pass it on as an input to the transformation engine, which will generate then automatically the formal models.

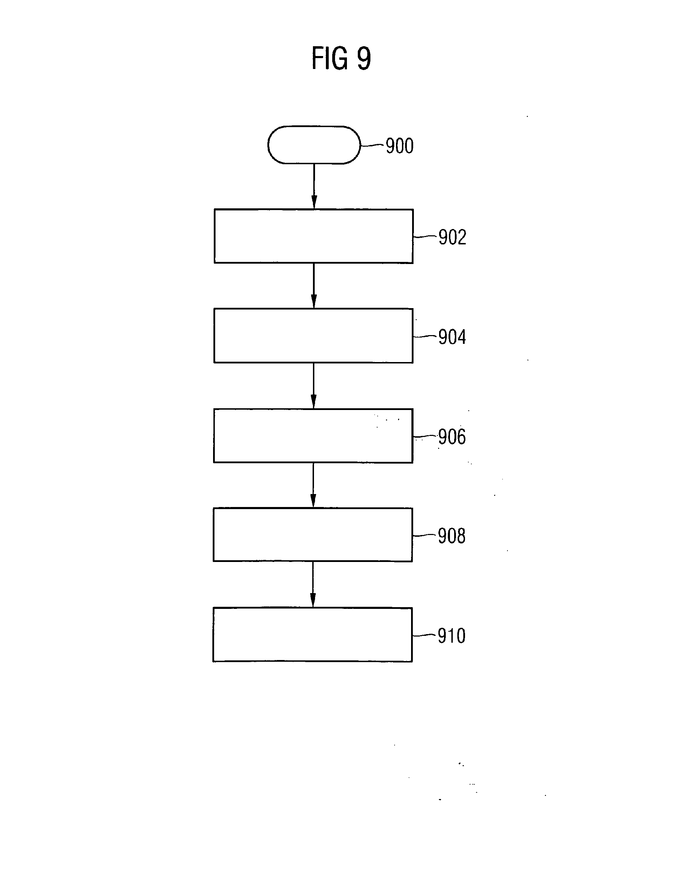

Fig. 9 portrays a flow chart illustrating a method of informal to formal model generation in accordance with the present invention. In Fig. 9 the order of description should not be construed as to imply that these operations are necessarily order-dependent.

An information processing method 900 executed by an information processing apparatus 800 including a means for informal to formal models generation 304, consists of at least the following steps: a step 902 of receiving input data presented in an informal or semi-formal format, a step 904 of receiving a set of rules for conversion of a conceptual model to a formal model, a step 906 of processing said input data, a step 908 for outputting said processed data as conceptual model of said data, and a step 910 of converting said conceptual model into a formal model according to rules initially provided.

The above description of illustrated embodiments of the invention, including what is described in the Abstract, is not intended to be exhaustive or to limit the invention to the precise forms disclosed. While specific embodiments of, and examples for, the invention are described herein for illustrative purposes, various equivalent modifications are possible within the scope of the invention, as those skilled in the relevant art will recognize.

These modifications can be made to the invention in light of the above detailed description. The terms used in the following claims should not be construed to limit the invention to the specific embodiments disclosed in the specification and the claims. Rather, the scope of the invention is to be determined entirely by the following claims, which are to be construed in accordance with established doctrines of claim interpretation.

### LEGEND OF ELEMENTS:

100: block diagram of a process employing a model-based method of obtaining the requirements specification;
102: block representation of the step of compiling the initial statement of needs;
104: block representation of the step of conceptual modeling;
106: block representation of the step of elicitation of stakeholder requirements;
108: block representation of the step of creating an initial model and refining said initial model to a refined model;
110: block representation of the step of building the requirements specification;
200: block representation of an integrated process employing both formal and informal methods for requirements specification development;
202: block representation of the step of creating the formal model;
204: block representation of the step of creating the formal specification;
300: block representation of a mechanism of transforming an informal or semi-formal requirements specification to a formal model;
302 A, B, ... N: block representation of input data presented in informal or semi-formal format;
304: block representation of means for informal to formal models generation;
306 A, B, ...N: block representation of outputted data presented in formal model;
302 N-1: block representation of data representing input model and target model definition rules;
302 N: block representation of data representing input rules and target rules;
302 N+1: block representation of data representing interactive transformation of models;
302 N+X: block representation of data representing the output of formal models;
502: block representation of the input means of the means for informal to formal models generation;
504: block representation of the configuration means of the means for informal to formal models generation;
506: block representation of the transformation means of the means for informal to formal models generation;
508: block representation of the output means of the means for informal to formal models generation;
602: block representation of specific formal language model;
604: block representation of semi-formal model;
606: block representation of informal model;
608: block representation of formal language rules;
610: block representation of semi-formal model rules;
612: block representation of informal model rules;
614: block representation of formal model;
616: block representation of conceptual model;
618: block representation of semi-formal model;
702: block representation of formal model;
704: block representation of conceptual model;
706: block representation of formal model;
800: block representation of computing means;
802: block representation of processing means;
900: flow chart representation of an information processing method;
902: receiving step;
904: receiving step;
906: processing step;
908: outputting step; and
910: conversion step.

## Claims

1. An information processing apparatus, comprising:
means for informal to formal models generation hosting a framework,
said framework being capable of
receiving input data presented in an informal or semi-formal format,
automatically processing said input data to generate data presented in a formal data format, and
outputting said data in formal format for further use by the information processing apparatus in a formal model.

2. The information processing apparatus of claim 1, wherein said means for informal to formal models generation comprise:
input means for receiving the input data presented in an informal or semi-formal format,
configuration means for defining formal model language rules,
transformation means for automatically transforming the provided models into a corresponding target formal model iteratively, and
output means for outputting said data in formal format for further use by the information processing apparatus in a formal model.

3. An information processing method executed by an information processing apparatus including a means for informal to formal models generation, the information processing method comprising:
Receiving input data presented in an informal or semi-formal format;
Receiving a set of rules for conversion of a conceptual model to a formal model;
Processing said input data;
Outputting said processed data as conceptual model of said data, and
Converting said conceptual model into a formal model according to rules initially provided.

4. A computer-readable recording medium storing a control program, the control program causing the computer to execute a process comprising:
an receiving procedure for receiving input data presented in an informal or semi-formal format, and receiving a set of rules for conversion of a conceptual model to a formal model,
a processing procedure for processing said input data,
an outputting procedure for outputting said processed data as conceptual model of said data, and a conversion procedure for converting said conceptual model into a formal model according to rules initially provided.
